Europäisches Patentamt

European Patent Office

Office européen des brevets

(19)

(11) Veröffentlichungsnummer: **0 385 328**

**A1**

(12) **EUROPÄISCHE PATENTANMELDUNG**

(21) Anmeldenummer: **90103664.0**

(51) Int. Cl.5: **A01B 39/16**

(22) Anmeldetag: **26.02.90**

(30) Priorität: **01.03.89 DE 3906433**

(43) Veröffentlichungstag der Anmeldung:
**05.09.90 Patentblatt 90/36**

(84) Benannte Vertragsstaaten:
**AT CH DE ES FR GB IT LI NL**

(71) Anmelder: **Maschinenfabrik Bermatingen GmbH & Co.**
**Kesselbachstrasse 4**
**D-7775 Bermatingen(DE)**

(72) Erfinder: **Schautzgy, Achim, Dipl.-Ing.**
**Anemonenweg 4**
**D-7994 Langenargen(DE)**

(74) Vertreter: **Engelhardt, Guido, Dipl.-Ing.**
**Patentanwalt Montafonstrasse 35 Postfach 1350**
**D-7990 Friedrichshafen 1(DE)**

(54) **Landwirtschaftliche Maschine.**

(57) Bei einer landwirtschaftlichen Maschine (1) mit einem schwenkbaren Tragarm (3), dem ein Fühler (11) und ein Hubzylinder (14) zugeordnet sind, dem bei Betätigung des Fühlers (11) über eine Steuereinrichtung (31) Druckmittel zuführbar ist, weist der Hubzylinder (14) einen beidseitig von Druckmittel beaufschlagbaren Kolben (16) auf und die Steuereinrichtung (31) besteht aus einem in den Druckmittelzuführungsleitungen (41, 42) eingesetztes 4/3-Wege-Ventil (38) sowie zwei in dessen Stromkreise (39, 40) eingeschaltete Schaltglieder (45, 46) von denen das eine Schaltglied (45) durch den Fühler (11) betätigbar ist und zwei Schaltkontakte aufweist und das andere Schaltglied (46) als durch den Tragarm (3) betätigbarer Endschalter ausgebildet ist.

Durch diese Ausgestaltung ist es möglich, den Tragarm (3) stets in einer definierten Lage zu halten und dessen Schwenkbewegungen unabhängig von der jeweiligen Fahrgeschwindigkeit und somit auch bei Schrägfahrten exakt zu steuern. Außerdem ist der Schwenkbereich des Tragarms (3) einstellbar.

FIG. 1

## Landwirtschaftliche Maschine

Die Erfindung bezieht sich auf eine landwirtschaftliche Maschine mit einem schwenkbar an einem Maschinenrahmen gehaltenen Tragarm, an dem ein oder mehrere Bodenbearbeitungswerkzeuge, beispielsweise ein Mähbalken, Rechzinken oder dgl., angebracht sind, wobei dem Tragarm ein Fühler und ein Hubzylinder zugeordnet sind, dem bei Betätigung des Fühlers über eine Steuereinrichtung Druckmittel zuführbar ist.

Bei landwirtschaftlichen Maschinen dieser Art ist der dem Tragarm zugeordnete Hubzylinder mit einem einseitig von Druckmittel beaufschlagbaren Verstellkolben versehen und die Steuereinrichtung weist ein 4/2-Wegenventil sowie ein 3-Wege-Stromregelventil auf, wobei das 4/2-Wegeventil durch einen von dem Fühler beeinflußbaren Endschalter betätigt wird und das Stromregelventil von Hand einzustellen ist. Abgesehen davon daß das Stromregelventil in der Anschaffung teuer ist, muß mittels diesem die Menge des dem Verstellkolben, der durch einen Gasspeicher in seiner Ausgangslage zurückgedrückt wird, zuzuführenden Druckmittels in Abhängigkeit von der Fahrgeschwindigkeit eingestellt werden, um ein sachgerechtes Eine und Ausschwenken des Tragarmes zu gewährleisten. Dies bedingt aber, daß der Fahrer von der Zugmaschine abzusteigen und die jeweils erforderliche Einstellung vorzunehmen hat. Oftmals wird jedoch diese Einstellung aus Bequemlichkeit nicht oder nicht exakt vorgenommen, so daß z. B. bei Mäharbeiten in einer Obstbaumkultur durch den Schwenkbar die Stämme der Obstbäume beschädigt werden oder Gras im Bereich eines Baumstammes stehen bleibt. Vor allem aber ist bei dieser bekannten Steuereinrichtung von Nachteil, daß bei Schrägfahrten, und mittels derartiger Maschinen werden vielfach Arbeiten in Hanglagen ausgeführt, durch das Gewicht des Tragarmes der Gleichgewichtszustand zwischen der von dem Verstellkolben aufgebrachten Kraft und der Gegenkraft des Gasspeichers verändert wird. Dies führt oftmals zu einem unkontrollierten Ein- oder Ausschwenken des Tragarmes und infolge davon zu unsachgemäß ausgeführten Arbeiten.

Aufgabe der Erfindung ist es daher, eine landwirtschaftliche Maschine der vorgenannten Gattung zu schaffen, bei der der Tragarm stets in einer definierten Lage gehalten wird und dessen Schwenkbewegungen unabhängig von der jeweiligen Fahrgeschwindigkeit und somit auch bei Schrägfahrten exakt steuerbar sind, so daß Hindernisse optimal umfahren werden können. Des weiteren soll der Schwenkbereich des Tragarmes auch durch eine Fernbedienung ohne Schwierigkeiten an unterschiedliche Arbeitsbreiten eingestellt werden können. Der dazu erforderliche Bauaufwand soll gering gehalten werden, dennoch soll ein störungsfreier Betrieb gewährleistet sein.

Gemäß der Erfindung wied dies bei einer derartigen landwirtschaftlichen Maschine dadurch erreicht, daß der Hubzylinder einen beidseitig von druckmittel beaufschlagbaren Verstellkolben aufweist und daß die Steuereinrichtung aus einem in den Druckmittelzuführungsleitungen des Hubzylinders eingesetztes elektromagneitsch betätigbasres 4/3-Wegenventil sowie aus zwei in dessen Stromkreise eingeschaltete Schaltglieder besteht, von denen das eine Schaltglied durch den Fühler des Tragarms betätigbar ist und zwei Schaltkontakte aufweist und das andere Schaltglied als durch den Tragarm beeinflußbare Endschalter ausgebildet ist.

Das dem Fühler zugeordnete Schaltglied sollte hierbei als Öffner und Schließer ausgebildet und das 4/3-Wegeventil sollte derart durch diese beeinflußbar sein, daß bei Betätigung des Fühlers dem Hubzylinder solange Druckmittel zum Einschwenken des Tragarms zuführbar ist, bis dieser in Endstellung eingeschwenkt ist oder durch den Schließer das 4/3-Wegeventil umgeschaltet wird.

Des weiteren sollte bei Betätigung des dem Tragarm zugeordneten Schaltgliedes durch diesen das 4/3-Wegeventil zur Beendigung der Ausschwenkbewegung des Tragarms in Nullstellung bringbar sein.

Zur Einstellung der Arbeitsbreite der Maschine kann das dem Tragarm zugeordnete Schaltglied mittels eines verstellbar angeordneten, beispielsweise in einer Kulisse geführten und mittels einer Spannschraube arretierbaren Anschlages betätigbar sein, nach einer andersartigen Ausgestaltung ist es aber auch möglich, den Verstellweg des Verstellkolbens des Hubzylinders durch einen in dessen Zylinder angeordneten Anschlagring zu begrenzen, der verschiebbar in dem Zylinder geführt und ein- oder beidseitig von Druckmittel beaufschlagbar und durch dieses arretierbar ist.

Sehr vorteilhaft ist es ferner, wenn das dem Fühler zugeordnete Schaltglied einen von desen Schaltstößel zu durchfahrenden vorzugsweise einstellbaren Schaltweg aufweist, in dessen Bereich der Öffner und der Schließer geöffnet sind.

Angebracht ist es auch, in den zu den Druckräumen des Hubzylinders führenden Druckmittelleitungen jeweils ein Druckbegrenzungsventil einzuschalten.

Wird eine landwirtschaftliche Maschine gemäß der Erfindung ausgebildet, so ist es auf sehr einfache Weise möglich, die Schwenkbewegung des Tragarmes exakt zu steuern und diesen stets in einer definierten Lage zu halten. Ist nämlich der Verstellkolben des Hubzylinders beidseitig von Druckmittel beaufschlagbar und weist die Steuereinrichtung ein 4/3-Wegeventil sowie zwei von dem Fühler und dem Tragarm betätigbare Schaltglieder auf, ist nicht nur die Schwenkbewegung mit Hilfe des dem Fühler zugeordneten Schaltgliedes auslösbar und in jeder Schwenkstellung des Tragarmes unterbrechbar, sondern dieser behält, da der Verstellkolben des Hubzylinders durch eingesperrte inkompressible Flüssigkeitssäulen arretiert ist, die eingenommene Stellung bei. Durch das Gewicht des Tragarmes wird somit bei Arbeiten in Hanglagen dessen Schwenkstellung nicht verändert.

Von besonderem Vorteil ist des weiteren, da das von dem Fühler betätigbare Schaltglied einen Schaltweg aufweist, indem keiner der Kontakte betätigt ist, daß in dem diesen Schaltweg zugeordneten Verstellbereich des Fühlers keine Schwenkbewegungen des Tragarmes ausgeführt werden. Die an dem Tragarm angebrachten Bodenbearbeitungswerkzeuge können somit sehr nahe an einen Baumstamm herangeführt und um diesen herumgeführt werden. Und da das 4/3-Wegeventil nur geschaltet wird, wenn eine Schwenkbewegung auszuführen ist, wird dem Hubzylinder stets nur kurzzeitig Druckmittl zugeführt. Während der anderen Betriebszeit strömt dieses vielmehr, ohne daß ein Druckaufbau erfolgt, über das 4/3-Wegeventil in den Vorratsbehälter zurück, so daß ein Aufheizen des Druckmittels nahezu ausgechlossen ist.

Des weiteren kann mit Hilfe des dem Tragarm zugeordneten Endschalters oder durch eine Hubbegrenzung des Verstellkolbens des Hubzylinders auf äußerst einfache Weise die jeweils gebotene Arbeitsbreite der Maschien eingestellt und somit an die Gegebenheiten angepaßt werden. Und da diese Einstellung vom Führerstand vorgenommen werden kann, ist dies einfach zu bewerkstelligen. Bei hoher Funktionssicherheit und großer Zuverlässigkeit, da meist erprobte handelsübliche Aggregate verwendet werden können, sowie einfacher Bedienbarkeit, ist durch die erfindungsgemäße Ausgestaltung somit eine Maschine geschaffen, die ein sachgerechtes Ein- und Ausschwenken des Tragarmes und demnach eine exakte Bodenbearbeitung mittels der an diesem angebrachten Werkzeuge erlaubt.

In der Zeichnung ist ein Ausführungsbeispiel der gemäß der Erfindung ausgebildeten landwirtschaftlichen Maschine dargestellt, das nachfolgend im einzelnen erläutert ist. Hierbei zeigt:

Figur 1 einen an einem Maschinenrahmen gehaltenen mittels eines Hubzylinders verschwenkbaren Tragarm,

Figur 2 das Schaltschema der dem Hubzylinder zugeordneten Steuereinrichtung,

Figuren 3 und 4 das dem an dem Tragarm angebrachten Fühler zugeordnete Schaltglied in unterschiedlichen Betriebsstellungen und

Figur 5 eine weitergehende Ausgestaltung des Schaltschemas der Steuereinrichtung nach Figur 2.

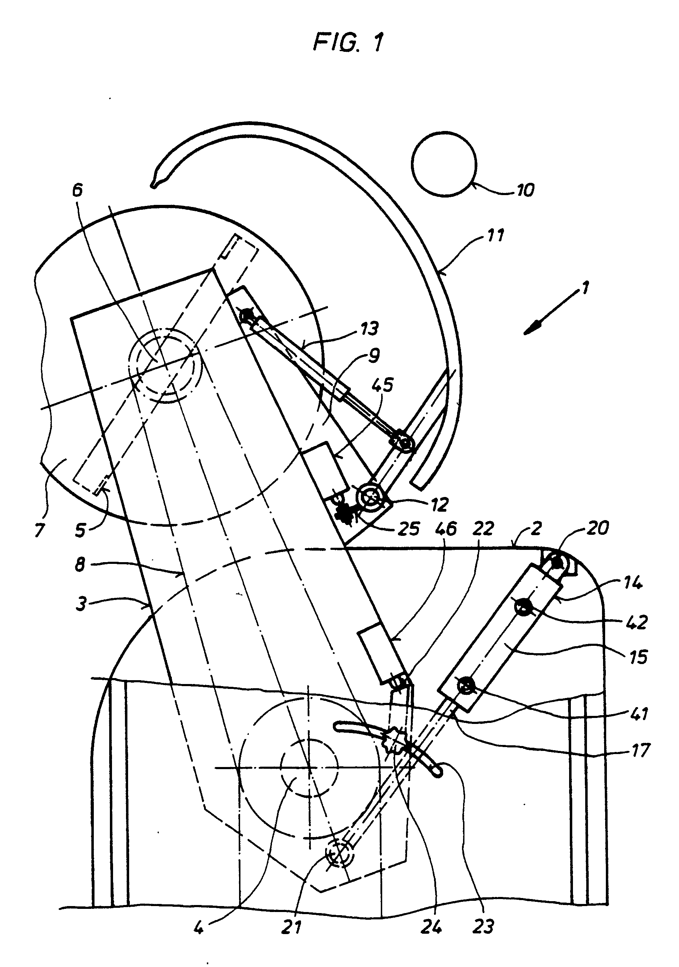

Die in Figur 1 dargestellte und mit 1 bezeichnete landwirtschaftliche Maschine besteht aus einem verfahrbaren Maschinenrahmen 2 und einem an diesem gehaltenen Tragarm 3, der begrenzt verschwenkbar auf einer Welle 4 gelagert ist und ein Bodenbearbeitungswerkzeug in Form eines Messerbalkens 5 trägt. Über einen Keilriementrieb 8 ist der auf einer Welle 6 angeordnete und durch eine Haube 7 abgedeckte Messerbalken 5 antreibbar.

An dem Tragarm 3 ist des weiteren an einer Platte 9 ein Fühler 11 angebracht, der bei einer Anlage an einem Hindernis 10, beispielsweise an einem Stamm eines Baumes, durch dieses in Richtung des Tragarmes 3 einschwenkbar ist. Der Fühler 11 ist dazu auf einer Welle 12 gelagert und zu dessen Rückführung in Ausgangslage dient eine auf diesen einwirkende Gasfeder 13, die ebenfalls an der Platte 9 abgestützt ist.

Das Ein- und Ausschwenken des Tragarmes 3 wird mittels eines Hubzylinders 14 bewerkstelligt, der einen beidseitig von Druckmittel beaufschlagbaren in einem Zylinder 15 angeordneten Verstellkolben 16 aufweist. Der Zylinder 15 ist hierbei mittels einer Welle 20 an dem Maschinenrahmen 2, die Kolbenstange 17 des Verstellkolbens 16 dagegen ebenfalls mittels einer Welle 21 an dem Tragarm 3 angelenkt, so daß dieser entsprechend der Beaufschlagung des Verstellkolbens 15 nach links oder nach rechts verschwenkbar ist.

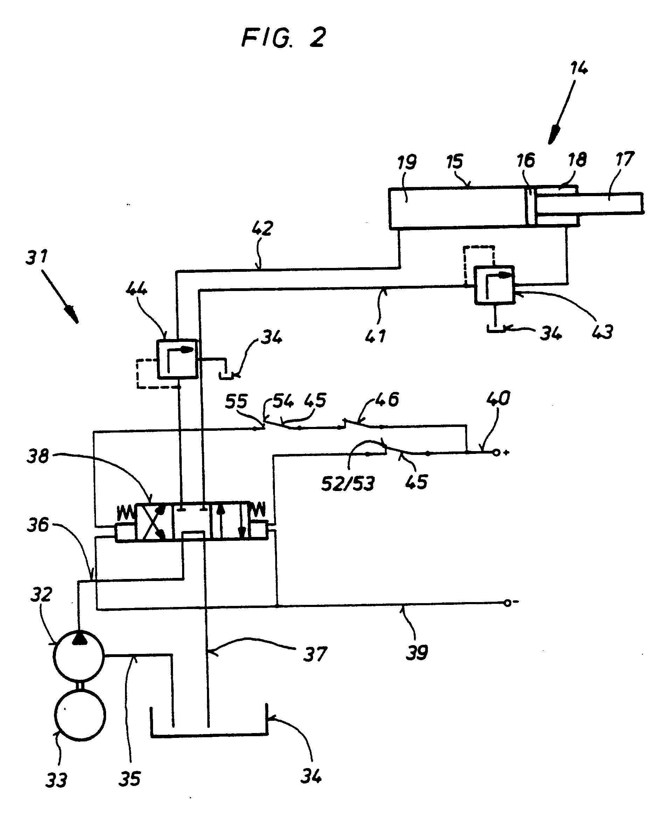

Die in Figur 2 schematisch dargestellte, dem Hubzylinder 14 zugeordnete Steuereinrichtung 31 besteht im wesentlichen aus einem 4/3-Wegeventil 38 sowie einem durch den Fühler 11 betätigbarem Schaltglied 45 und einem durch den Tragarm 3 betätigbares Schaltglied 46, mittels denen die Druckmittelzufuhr des von einer durch einen Motor 33 z. B. dem Fahrzeugmotor antreibbaren Pumpe 32 aus einem Vorratsbehälter 34 über eine Leitung 35 geförderten Druckmittels in die Druckräume 18 und 19 des Hubzylinders 14 steuerbar ist.

Das 4/3-Wegeventil 38 ist hierbei an die Druckleitung 36 der Pumpe 32 sowie eine zu dem Vorratsbehälter 34 führende Rücklaufleitung 37 angeschlossen und ermöglicht es, die Leitungen 36 und 37 wechselweise mit Druckmittelleitungen 41 und 42 zu verbinden, die in die Druckräume 18 bzw. 19 des Hubzylinders 14 münden. Um Druckspitzen zu vermeiden, ist in die Druckleitungen 41 und 42 jeweils ein Druckbegrenzungsventil 43 bzw. 44 eingesetzt.

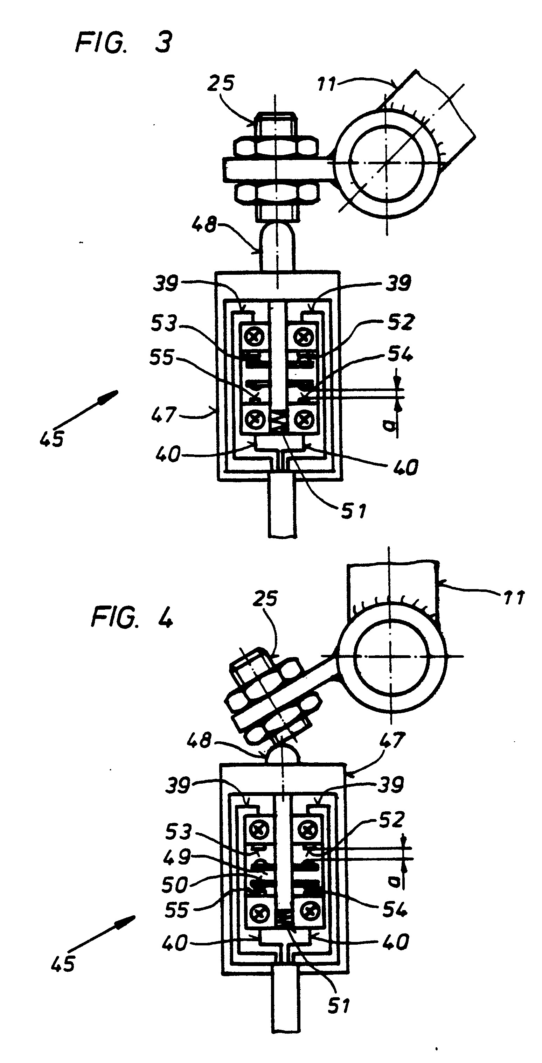

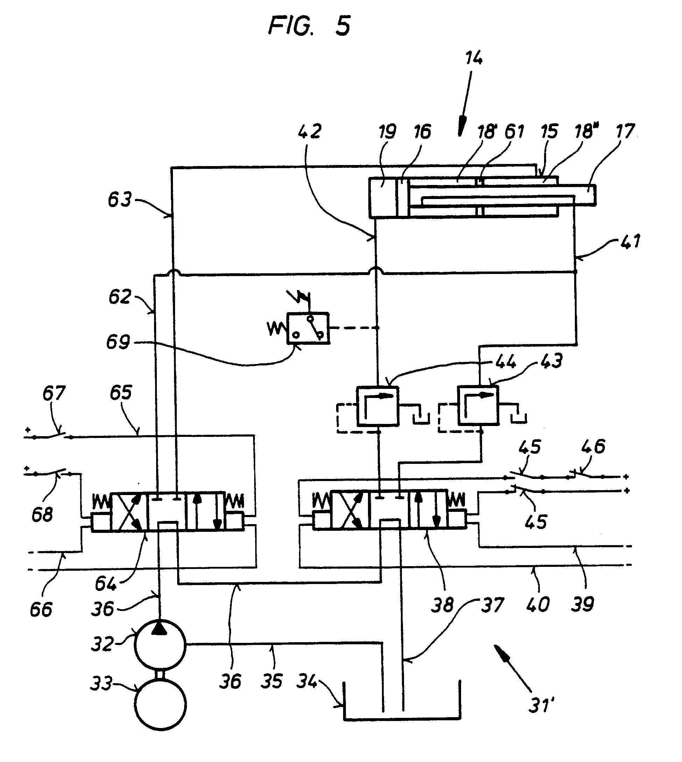

Das dem Fühler 11 zugeordnete und durch einen an diesem angebrachten Ansatz 25 betätigbare Schaltglied 45 ist, wie dies im einzelnen den Figuren 3 und 4 zu entnehmen ist, als Öffner und als Schließer ausgebildet. An einem in einem Gehäuse 47 entgegen der Kraft einer Feder 51 verschiebbar eingebauten Schaltstößel 48 sind hierbei zwei Kontaktplatten 49 und 50 angebracht, und in dem Gehäuse 47 sind des weiteren ortsfeste Kontakte 52 und 53 bzw. 54 und 55 angeordnet, die in die Stromkreise 39 bzw. 40 des 4/3-Wegeventils 38 eingeschaltet sind. Die Kontakte 52 und 53 bilden hierbei den Öffner, die Kontakte 54 und 55 den Schließer des Schaltgliedes 45.

Das dem Tragarm 3 zugeordnete Schaltglied 46 ist ein Endschalter, der mit einem Anschlag 22 zusammenwirkt. Bei der Ausgestaltung nach Figur 1 ist der Anschlag 22 verstellbar in einer Kulisse 23 des Maschinenrahmens 2 geführt und mit Hilfe einer Spannschraube 34 arretierbar. Da durch das Schaltglied 46 und das mit diesem zusammenwirkende 4/3-Wegenventils 38 die Schwenkbewegung des Tragarmes 3 nach rechts begrenzbar ist, kann durch Ver stellung des Anschlages 22 die jeweilige Arbeitsbreite der Maschine 1 eingestellt werden.

In der in Figur 1 gezeigten Lage des Fühlers 11, die der Darstellung gemäß Figur 5 entspricht, sind in dem Schaltglied 45 die Kontakte 52 und 53 unterbrochen, so daß in dem Stromkreis 39 kein Strom fließt. Die in den Stromkreis 40 eingeschalteten Kontakte 54 und 55 des Schaltgliedes 45 sind zwar über die Kontaktplatte 50 miteinander verbunden, durch das als Endschalter ausgebildete Schaltglied 46 ist aber auch der Stromkreis 40 unterbrochen. Das 4/3-Wegeventil 38 befindet sich somit in Nullstellung, so daß das von der Pumpe 32 geförderte Druckmittel über die Leitung 37 in den Vorratsbehälter 34 zurückströmt.

Bei Anlage des Fühlers 11 an dem Hindernis 10 wird dieser eingeschwenkt und es werden die Kontakte 54 und 55 unterbrochen. Die Kontakte 52 und 53 werden jedoch nicht sofort überbrückt, da dem Schaltstößel 48 ein Schaltweg a zugeordnet ist, in dem auch die Kontakte 52 und 53 geöffnet bleiben. Erst nach Durchfahren des Schaltweges a werden die Kontakte 52 und 53 mittels der Kontaktplatte 49 geschlossen, so daß ab diesem Zeitpunkt über den Stromkreis 40 dem 4/3-Wegeventil 38 elektrische Energie zugeführt und dieses in die rechte Endstellung gebracht wird. Dadurch wird die Druckmittelleitung 36 mit der Druckmittelleitung 41 verbunden und dem Druckraum 18 des Hubzylinders 14 wird Druckmittel zugeführt, der Druckraum 19 ist dagegen über die Druckmittelleitung 42, das 4/3-Wegeventil 38 sowie die Rücklaufleitung 37 entlüftet, so daß der Verstellkolben 16 aus der in Figur 2 gezeigten Stellung nach links verschoben und somit der Tragarm 3 eingeschwenkt wird.

Sobald jedoch der Fühler 11 durch die Kraft der Gasfeder 13 zurückgeführt und der Schaltstößel 48 durch den Ansatz 25 des Fühlers 11 betätigt wird, werden die Kontakte 52 und 53 unterbrochen, das 4/3-Wegeventil 38 nimmt wiederum die Nullstellung ein. Das in den Druckräumen 18 und 19 des Hubzylinders 14 sowie den Druckmittelzuführungsleitungen 41 und 42 befindliche Druckmittel bleibt demnach eingesperrt, die Stellung des Tragarmes 3 wird, da somit kein Druckmittel dem Hubzylinder 14 zugeführt wird, nicht verändert. Auf diese Weise kann der Mähbalken 5 dicht an dem Hindernis 10 vorbeigeführt werden, ohne daß dieses durch den Tragarm 3 beschädigt wird. Erst nach Durchfahren des Schaltweges a werden die Kontakte 54 und 55 wiederum miteinander verbunden. Und da das Schaltglied 46 nicht betätigt ist, ist der Stromkreis 40 geschlossen, so daß über das sich in der linken Endstellung befindende 4/3-Wegeventil 38 und die Druckmittelzuführungsleitung 42 dem Druckraum 19 des Hubzylinders 14 Druckmittel zugeführt wird. Bis zur Anlage des Schaltgliedes 46 an dem Anschlag 22 - sofern nicht zwischenzeitlich der Fühler 11 erneut ausgelenkt wird - wird somit durch den Verstellkolben 16 der Tragarm 3 nach rechts in die Endstellung verschwenkt. Und da der Anschlag 22 verstellbar ist, kann die Endstellung und damit die Arbeitsbreite der Maschine 1 leicht verändert und den jeweiligen Gegebenheiten angepaßt werden.

Gemäß Figur 5 ist der Schwenkbereich des Tragarmes 3 mit Hilfe des Hubzylinders 14 einstellbar, und zwar durch Begrenzung des Hubes des Verstellkolbens 16. Dazu ist in dem Zylinder 15 ein Anschlagring 61 eingesetzt, durch den der von der Kolbenstange 17 des Verstellkolbens 16 durchgriffene Druckraum 18 in die beiden Druckräume $18'$ und $18''$ unterteilt ist. Über ein weiteres 4/3-Wegeventil 64 und Leitungen 62 und 63 sind die Druckräume $18'$ und $18''$ wechselweise an die Druckmittelleitung 36 anschließbar. In die dem 4/3-Wegeventil 64 zugeordneten Stromkreise 65 und 66 sind des weiteren Schalter 67 bzw. 68 eingesetzt, die von dem Fahrer bei einer Veränderung der Arbeitsbreite der Maschine 1 leicht zu betätigen sind.

Durch den Anschlagring 61 wird der Hub des Verstellkolbens 16 begrenzt. Wird dem Druckraum $18'$ über die Leitung 62, in dem mittels des Schalters 68 der Stromkreis 66 geschlossen und das 4/3-Wegeventil 64 in die linke Endstellung gebracht wird, bei entlüftetem Druckraum $18''$ Druckmittel zugeführt, so wird der Anschlagring 61 nach rechts verschoben. Durch eine Druckmittelzufuhr über die Leitung 63 kann dagegen der Anschlagring 61 nach links verstellt werden. Lediglich durch Betätigen der Schalter 67 oder 68 kann somit der Verstellbereiches Tragarmes 3 vor Beginn einer Arbeit bzw. bei ausgeschwenktem Tragarm 3 eingestellt werden. Und um die Schwenkbewegung des Tragarmes 3 bei Anlage an dem Anschlagring zu begrenzen und das 4/3-Wegeventil 38 der Steuereinrichtung 31 in die Nullstellung zurückzuführen, ist an die Leitung 42 ein Druckschalter 69 angeschlossen, durch den, da sich bei Anlage des Verstellkolbens 16 an dem Anschlagring Druck aufbaut, anstelle des mechanisch betätigten Schaltgliedes 46 der Stromkreis 40 geschlossen und die Schwenkbewegung des Tragarmes 3 beendet wird.

**Ansprüche**

1. Landwirtschaftliche Maschine mit einem schwenkbar an einem Maschinenrahmen gehaltenen TRagarm, an dem ein oder mehrere Bodenbearbeitungswerkzeuge, beispielsweise ein Mähbalken, Rechzinken oder dgl., angebracht sind, wobei dem Tragarm ein Fühler und ein Hubzylinder zugeordnet sind, dem bei Betätigung des Fühlers über eine Steuereinrichtung Druckmittel zuführbar ist,
**dadurch gekennzeichnet,**
daß der Hubzylinder (14) einen beidseitig von Druckmittel beaufschlagbaren Verstellkolben (16) aufweist und daß die Steuereinrichtung (31) aus einem in den Druckmittelzuführungsleitungen (41, 42) des Hubzylinders (14) eingesetztes elektromagnetisch betätigbares 4/3-Wegeventil (38) sowie aus zwei in dessen Stromkreise (39, 40) eingeschaltete Schaltglieder (45, 46) besteht, von denen das eine Schaltglied (45) durch den Fühler (11) des Tragarms (3) betätigbar ist und zwei Schaltkontakte (52,53) aufweist und das andere Schaltglied (46) als durch den Tragarm (3) beeinflußbarer Endschalter ausgebildet ist.

2. Landwirtschaftliche Maschine nach Anspruch 1,
**dadurch gekennzeichnet,**
daß das dem Fühler (10) zugeordnete Schaltglied (45) als Öffner (Kontakt 52, 53) und Schließer (Kontakt 54, 55) ausgebildet ist und daß das 4/3-Wegeventil (38) derart durch diese beeinflußbar ist, daß bei Betätigung des Fühlers (11) dem Hubzylinder (14) solange Druckmittel zum Einschwenken des Tragarms (3) zuführbar ist, bis dieser in Endstellung eingeschwenkt ist oder durch den Schließer (Kontakt 54, 55) das 4/3-Wegeventil (38) umgeschaltet wird.

3. Landwirtschaftliche Maschine nach Anspruch 1 oder 2,
**dadurch gekennzeichnet,**
daß bei Betätigung des dem Tragarm (3) zugeordneten Schaltgliedes (46) durch diesen das 4/3-Wegeventil (38) zur Beendigung der Ausschwenkbewegung des Tragarms (3) in Nullstellung bringbar ist.

4. Landwirtschaftliche Maschine nach Anspruch 3,
**dadurch gekennzeichnet,**
daß das dem Tragarm (3) zugeordnete Schaltglied (46) zur Einstellung der Arbeitsbreite der Maschine (1) mittels eines verstellbar angeordneten, beispielsweise in einer Kulisse (23) geführten und mittels einer Spannschraube (24) arretierbaren Anschlages (22) betätigbar ist.

5. Landwirtschaftliche Maschine nach Anspruch 3,
**dadurch gekennzeichnet,**
daß zur Einstellung der Arbeitsbreite der Maschine (1) der Verstellweg (S) des Verstellkolbens (16) des Hubzylinders (15) durch einen in dessen Zylinder (15) angeordneten Anschlagring (61) begrenzt ist, der verschiebbar in dem Zylinder (15) geführt und ein- oder beidseitig von Druckmittel beaufschlagbar und durch dieses arretierbar ist.

6. Landwirtschaftliche Maschine nach einem oder mehreren der Ansprüche 1 bis 5,
**dadurch gekennzeichnet,**
daß das dem Fühler (11) zugeordnete Schaltglied (45) einen von dessen Schaltstößel (48) zu durchfahrenden vorzugsweise einstellbaren Schaltweg (a) aufweist, in dem der Öffner (Kontakt 52, 53) und der Schließer (Kontakt 54, 55) geöffnet sind.

7. Landwirtschaftliche Maschine nach einem oder mehreren der Ansprüche 1 bis 6,
**dadurch gekennzeichnet,**
daß in den zu den Druckräumen (18, 19) des Hubzylinders (16) führenden Druckmittelleitungen (41, 42) jeweils ein Druckbegrenzungsventil (43, 44) eingeschaltet ist.

FIG. 1

## FIG. 2

FIG. 3

FIG. 4

# FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 596 245 (D. COGNACQ) * Seite 4, Zeile 30 - Seite 6, Zeile 39; Abbildung 1 * | 1-3 | A 01 B 39/16 |
| A | | 4,5 | |
| | --- | | |
| Y | DE-A-3 546 288 (W. DOPPSTADT) * Spalte 7, Zeile 28 - Spalte 8, Zeile 9; Abbildungen 1-3 * | 1-7 | |
| | --- | | |
| Y | US-A-4 518 043 (ANDERSON et al.) * Spalte 13, Zeile 58 - Spalte 14, Zeile 68; Abbildungen 1,4 * | 1-7 | |
| | --- | | |
| A | US-A-4 585 071 (ANDERSON et al.) * Spalte 9, Zeile 23 - Spalte 11, Zeile 68; Abbildungen 1,3 * | 1-7 | |
| | --- | | |
| A | CH-A- 477 152 (GEBR. CLEMENS KG) * Spalte 5, Zeile 61 - Spalte 6, Zeile 22; Abbildungen 1,2 * | 1-3 | |
| | --- | | |
| A | AT-B- 380 376 (A. FERSCHITZ) * Seite 3, Zeile 21 - Seite 4, Zeile 14; Abbildung 1 * | 1 | |
| | ----- | | |

RECHERCHIERTE SACHGEBIETE (Int. Cl.5)

A 01 B

Der vorliegende Recherchenbericht wurde für alle Patentansprüche erstellt

| Recherchenort | Abschlußdatum der Recherche | Prüfer |
|---|---|---|
| DEN HAAG | 31-05-1990 | WOHLRAPP R.G. |

EPO FORM 1503 03.82 (P0403)